# EUROPEAN PATENT SPECIFICATION

(11) **EP 2 060 960 B1**
(45) Date of publication and mention of the grant of the patent: **22.05.2013**
(21) Application number: 07745316.5
(22) Date of filing: 14.06.2007
(51) Int. Cl.: B60N 2/44, B60N 2/48, B60N 2/66

(54) **OPERATION DEVICE FOR VEHICLE SEAT AND OTHER EQUIPMENT**
BETRIEBSEINRICHTUNG FÜR EINEN FAHRZEUGSITZ UND ANDERE GERÄTE
DISPOSITIF DE FONCTIONNEMENT POUR SIÈGE DE VÉHICULE ET AUTRES ÉQUIPEMENTS

(30) Priority: 14.06.2006 JP 2006165289
(43) Date of publication of application: 20.05.2009
(73) Proprietor: TS Tech Co., Ltd., Asaka-shi, Saitama 351-0012 (JP)
(72) Inventor: AKUTSU, Takashi, Shioya-gun Tochigi 329-1217 (JP)
(74) Representative: Wilson Gunn
(86) International application number: PCT/JP2007/062059
(87) International publication number: WO 2007/145299

(56) References cited:
- GB-A- 270 645
- JP-A- 9 119 460
- JP-A- 09 119 460
- JP-A- 2006 122 297
- JP-U- 1 077 142
- JP-U- 01 077 142
- US-A- 1 830 003
- US-A1- 2004 159 525

## Description

### Technical Field

The present invention relates to an operation device for operating various actuating devices provided on a vehicle and more particularly, to an operating apparatus for operating an actuating mechanism for position adjustment of a lumber support (cushion plate) of a vehicle seat.

### Background Art

Conventionally, there has been known a lock mechanism including a drum case having a cylindrical drum, a lock spring having a coil portion which is fitted into the drum wall and locked by friction between the lock spring and the inner peripheral surface of the drum, a guide cylinder of a shaft guide having contact surfaces which each of a pair of the lock springs makes contact with, an operation transmitting member provided with a tongue piece which is directed into a cutout groove which forms the pair of the contact surfaces, and a rotation transmitting shaft member which is mounted rotatably with respect to the shaft guide so that it is rotated integrally with the operation transmitting member (for example, patent document 1).
Patent document 1: JP 9-119460 A describes the Precharacterizing features of claim 1.

### Disclosure of the Invention

In the above-described known example, the drum is locked by a friction force of the two coil springs. However, there exists a gap between an operating member for adjusting the diameter of the coil portion of the lock spring and an end portion of the coil portion. As a result, a rattling occurs in the shaft guide in its rotation direction when it is not operated, which is a problem which should be solved.

Accordingly, an object of the present invention is to provide an operation device which has solved the above-described problem reasonably by using one coil spring for the lock mechanism and another coil spring for preventing of rattling.

In accordance with the present invention there is provided an operation device having the characterizing features of claim 1.

### Brief Description of the Drawings

FIG. 1 is an exploded view of the operation device of the present invention.
FIG. 2 is a sectional view of the operation device.
FIG. 3 is a front view of a joint portion of the operation device.
FIG. 4 is a bottom view of the joint portion of the operation device.
FIG. 5 is a plan view of a rotation transmitting portion of the operation device.
FIG. 6 is a front view of a holder guide of the operation device.
FIG. 7 is a front view of a cover case of the operation device.
FIG. 8 is a plan view of the cover case.
FIG. 9 is a front view of the operation device.
FIG. 10 is a perspective view of a rattling preventing spring and a drum case.
FIG. 11 is an exploded perspective view of a seat back frame of a vehicle seat.

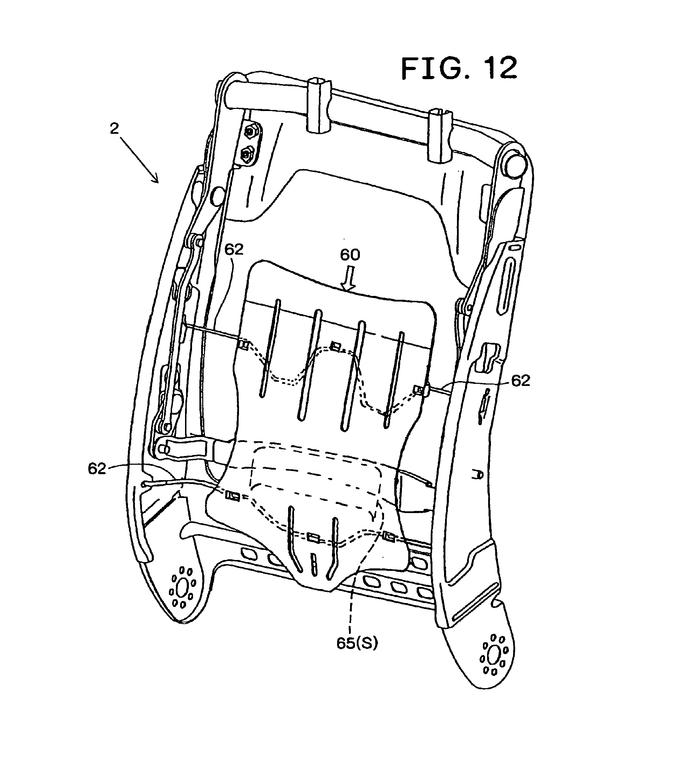

FIG. 12 is a perspective view of the seat back frame.

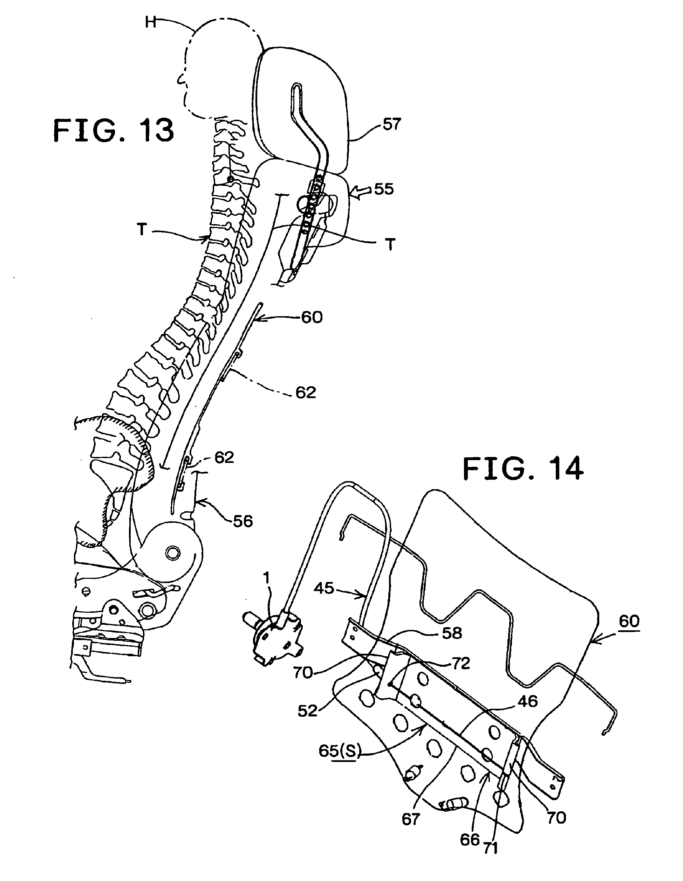

FIG. 13 is a schematic side view of the bone structure of a seated person and the seat back frame.
FIG. 14 is a schematic perspective view of a cushion plate and a back-forth adjusting mechanism.

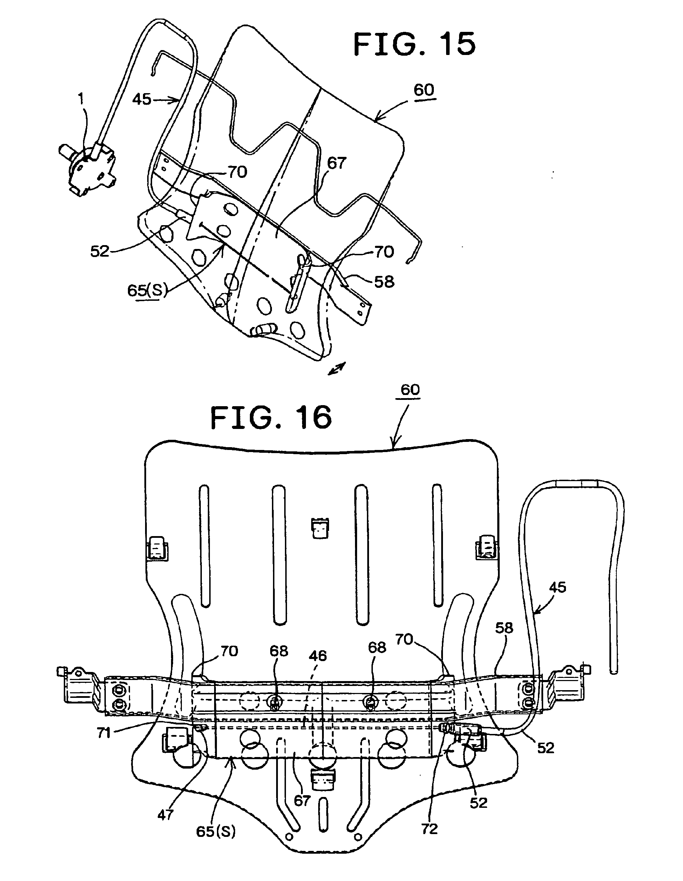

FIG. 15 is a schematic perspective view of a state in which the back-forth adjusting mechanism of FIG. 14 is actuated.
FIG. 16 is a rear view of the cushion plate provided with the back-forth adjusting mechanism.

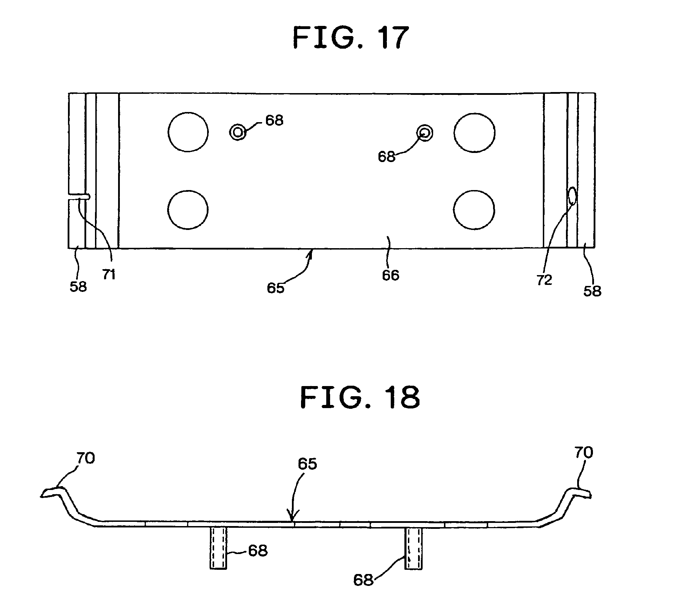

FIG. 17 is a rear view of a pressing body.
FIG. 18 is a plan view of the pressing body.

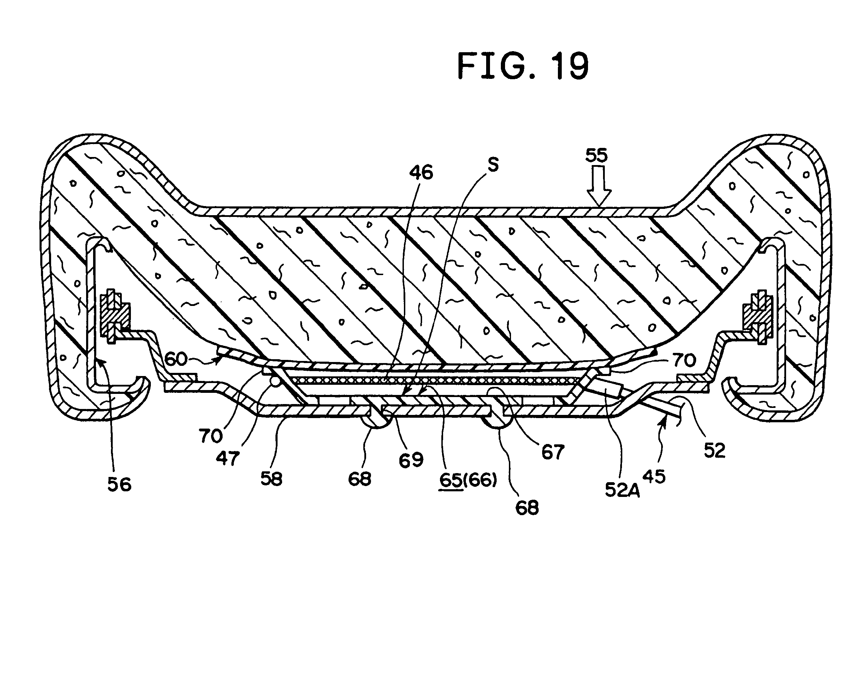

FIG. 19 is a sectional view of the seat back.

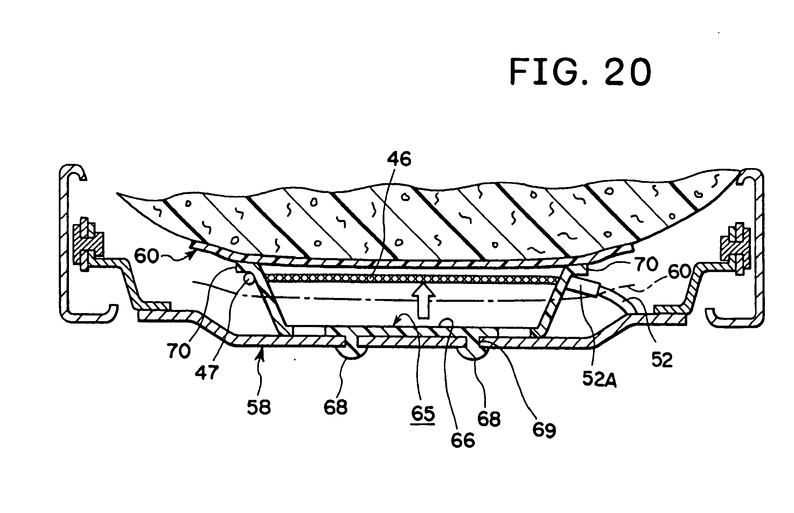

FIG. 20 is a sectional view of the seat back.

### Best Mode for Carrying Out the Invention

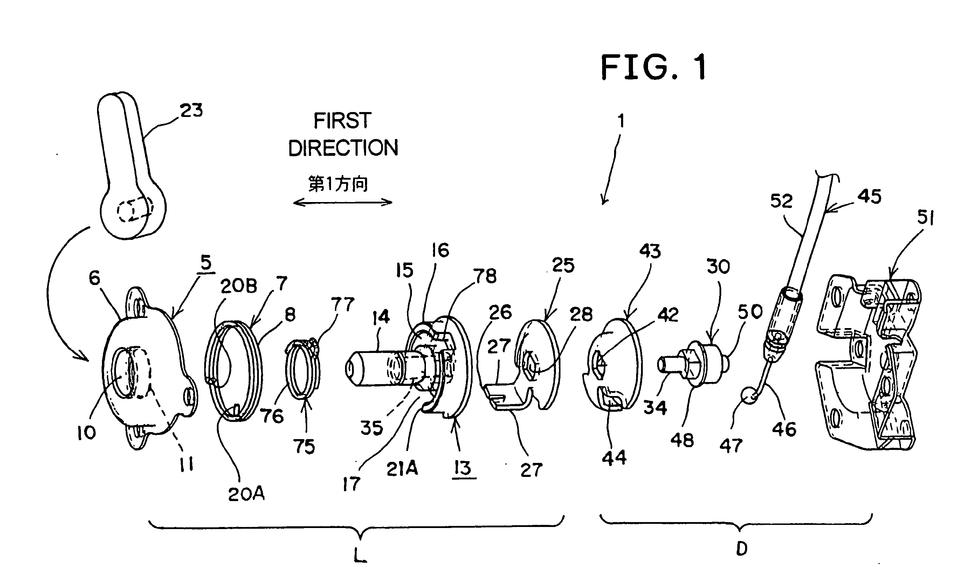

FIG. 1 shows an operation device 1 of the present invention and the operation device 1 includes a transmission mechanism D and a locking mechanism L. The locking mechanism L has a drum case 5. The cylindrical drum wall 6 of the drum case 5 has an axis extending in a first direction and a lock spring 7 is accommodated inside of the drum wall 6. When the radius of a coil portion 8 of the spring 7 is expanded by an operation described later, it makes a firm contact with the inner surface of the drum wall 6 so as to produce a large frictional resistance. A locking state of the operation device 1 is obtained by this frictional resistance. On the contrary, when the radius of the coil portion 8 is shortened, the contact between the drum wall 6 and the coil portion 8 is eliminated, so that the operation device 1 is changed into an unlocked state.

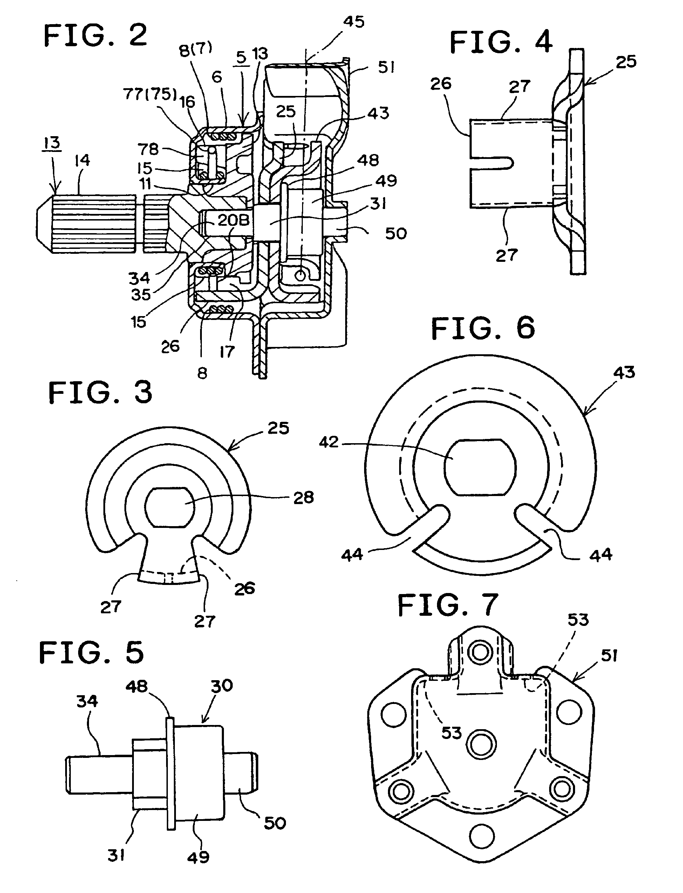

An inner cylindrical portion 11 extending in the first direction is provided in the center of the drum case and the shaft 14 of a shaft guide 13 is inserted into the insertion hole 10 of the inner cylindrical portion 11. The shaft guide 13 has a guide flange 16 located outside of the proximal portion of the shaft 14. A relatively wide annular space 15 is provided between the flange 16 and the proximal portion of the shaft 14. As shown in FIG. 2, the inner cylindrical portion 11 is inserted into the annular space 15 such that it is located outside of the proximal portion of the shaft 14. The coil portion 8 of the lock spring 7 is located outside of the guide flange 16.

A cutout portion 17 is formed in part of the guide flange 16. The cutout portion 17 is located in a range of about 1/4 the guide flange, that is, in the length of about 90 <. The guide flange 16 is formed into a cylindrical portion about 3/4 of its circumference. The external side surface of the guide flange is preferred to be formed into an inclined face in order to prevent the lock spring 7 disposed outside of the flange 16 from slipping out.

A pair of leg portions 20A, 20B of the lock spring 7 are bent inward from the coil portion 8 and disposed within the cutout portion 17. A contact face 21A which is engaged with the leg portion 20A and a contact face 21B which makes contact with the leg portion 20B are formed on both sides of the guide flange 16 cut out by the cutout portion 17. When the shaft guide 13 is rotated so that any one of the contact face 21A and the contact face 21B presses any one of the leg portions 20A, 20B inward, the diameter of the coil portion 8 of the lock spring 7 is shortened, so that the contact force between the coil portion 8 and the inner surface of the drum wall 6 is weakened to unlock the operation device 1.

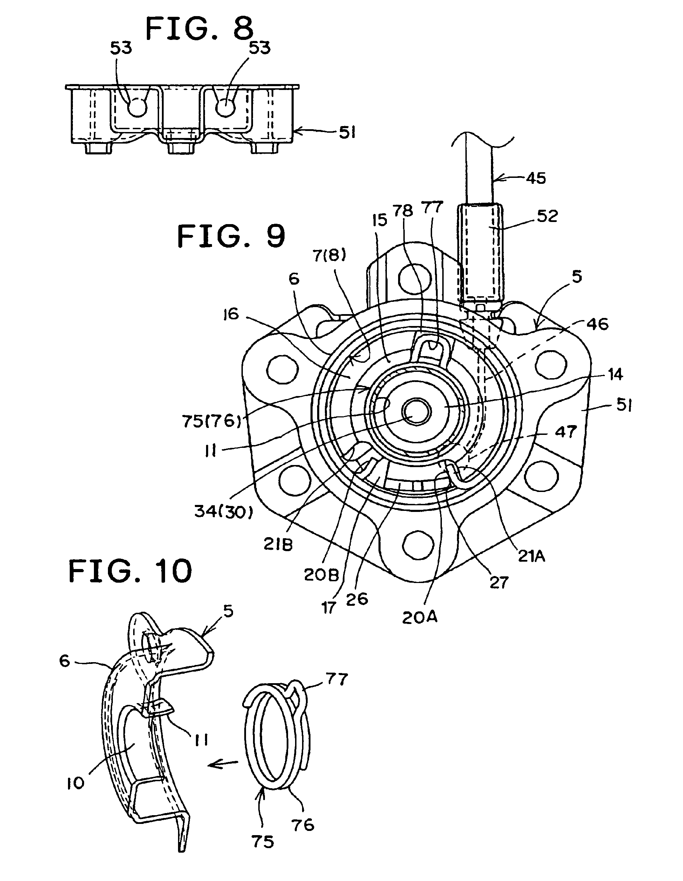

The shaft 14 of the shaft guide 13 is projected out of the drum case 5 and joined to an operating member 23 like an operating handle. As shown in FIG. 9, the width (length) of the cutout portion 17 of the guide flange 16 is set larger than an interval between the first leg portion 20A and the second leg portion 20B of the lock spring 7. As a result, the assembly is facilitated.

The tongue piece 26 of a connecting portion 25 is located within the cutout portion 17 of the shaft guide 13. The connecting portion 25 has a substantially circular plate and the tongue piece 26 bent from the circular plate. The tongue piece 26 is extended in the first direction. As shown in FIG. 9, the tongue piece 26 is formed shorter than the interval between the first leg portion 20A and the second leg portion 20B and disposed between the first leg portion 20A and the second leg portion 20B. Each end portion 27 of the tongue piece 26 can make contact with the contact faces 21A, 21B of the shaft guide 13.

The connecting portion 25 has an insertion hole 28 in the center and the engaging portion 31 of a rotation transmitting portion 30 extending in the first direction is engaged with the insertion hole 28. The rotation transmitting portion 30 and the connecting portion 25 are rotated integrally by an engagement between the insertion hole 28 and the engaging portion 31. A shaft portion 34 is formed at the front end of the rotation transmitting portion 30 and the shaft portion 34 is inserted into an accommodation hole 35 formed in the shaft guide 13 such that it is freely rotatable.

When the connecting portion 25 is rotated, the tongue piece 26 presses only any one of the first leg portion 20A and the second leg portion 20B of the lock spring 7 outward. Consequently, the diameter of the coil portion 8 of the lock spring 7 is increased, so as to lock the operation device 1.

The transmitting mechanism D has the rotation transmitting portion 30 and a holder guide 43. The holder guide 43 has an insertion hole 42 in the center and the engaging portion 31 of the rotation transmitting portion 30 is engaged with the insertion hole 42. Consequently, the rotation transmitting portion 30, the holder guide 43 and the connecting portion 25 are rotated integrally.

The holder guide 43 has a bowl-like shape. The holder guide 43 has an engaging groove 44 extending radiantly. The cable head 47 of an inner cable 46 of a wire cable 45 is engaged with the engaging groove 44. The rotation transmitting portion 30 has a large diameter flange portion 48 and the flange portion 48 makes contact with the inner surface of the holder guide 43. Consequently, the holder guide 43 is sandwiched by the connecting portion 25 and the flange portion 48.

The rotation transmitting portion 30 has a large-diameter shaft portion 49 located behind the flange portion 48 and a small-diameter shaft portion 50 located behind the large-diameter shaft portion 49. The small-diameter shaft portion 50 is supported by the cover case 51 rotatably. The drum case 5 is mounted on the cover case 51. The cover case 51 has a holding portion 53 for holding the end portion of an outer tube 52 of the wire cable 45. The cover case 51 has two holding portions 53 and the mounting position of the outer tube 52 is changed depending on a difference in the rotation direction of the shaft guide 13.

A rattling preventing spring 75 is provided outside of the inner cylindrical portion 11. The rattling preventing spring 75 has a coil portion 76 and a projection projecting in a radiant direction. The coil portion 76 has a slight smaller diameter than the inner cylindrical portion 11 and is mounted outside of the inner cylindrical portion 11. The projection 77 is fitted to a fitting hole 78 formed in the guide flange 16.

The rattling preventing spring 75 suppresses an excessive rotation of the shaft 14 of the shaft guide 13. That is, the contact faces 21A, 21B of the guide flange 16 of the shaft guide 13 confront the leg portions 20A, 20B of the lock spring 7 with a slight gap therebetween and usually are not in contact therewith. Thus, the rattling in the rotation direction of the shaft 14 of the shaft guide 13 is not suppressed.

The rattling preventing spring 75 suppresses the rattling in the rotation direction of the shaft 14. The coil portion 76 of the rattling preventing spring 75 is wound around the outer periphery of the inner cylindrical portion 11, so that the rattling preventing spring 75 is held on the inner cylindrical portion 11 at an appropriate strength by a friction between the coil portion 76 and the inner cylindrical portion 11. Then, the projection 77 of the spring 75 is fitted into the fitting hole 78 in the guide flange 16, thereby substantially blocking the rattling in the rotation direction of the shaft guide 13 (shaft 14) with respect to the inner cylindrical portion 11.

Because the projection 77 of the rattling preventing spring 75 is projected outward from halfway of the coil portion 76, it can preferably prevent any rattling of rotations in both normal and reverse directions of the shaft guide 13 effectively.

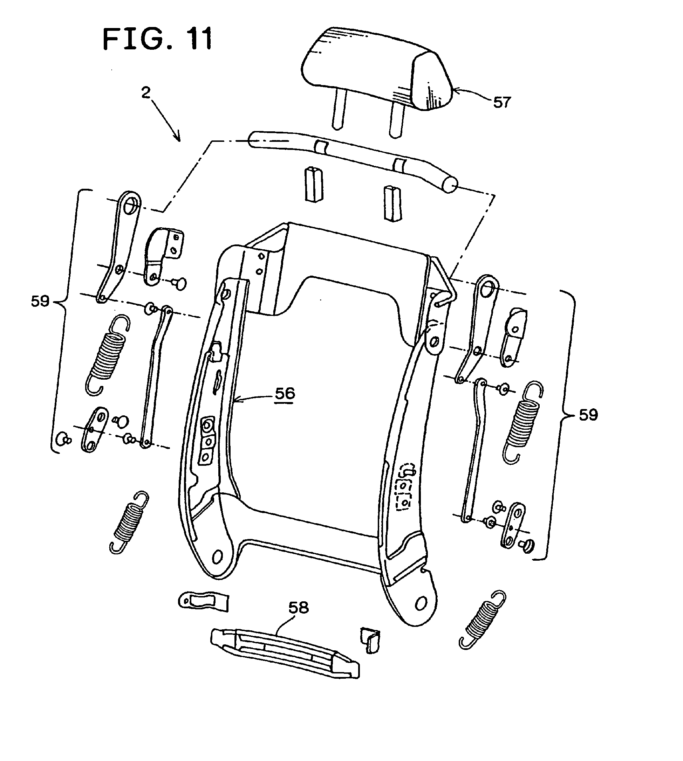

An example in which the operation device 1 is used for the vehicle seat 02 will be described with reference to FIG. 11 or later. The vehicle seat 02 includes a seat back 55, a seat back frame 56, a head rest provided on the top of the seat back 55 and a rear collision sensing body 58 provided on the seat back frame 56. The rear collision sensing body 58 senses a backward motion of a seated person T due to a collision from rearward.

The rear collision sensing body 58 and a head rest 57 are connected with a link mechanism 59 and if a seated person T is moved backward so that the rear collision sensing body 58 is moved backward, its energy is transmitted to the head rest 57 through the link mechanism 59. Consequently, the head rest 57 is moved forward so as to support the head H of the seated person T.

A cushion plate 60 for supporting the upper body (upper half body including the waist) of the seated person T is provided on the seat back frame 56. The cushion plate 60 is installed on the seat back frame 56 via a seat spring 62 such as a zigzag spring, formed wire spring such that it is movable in the back and forth direction freely. The cushion plate 60 supports the seated person T in the back and forth direction holding its plane condition. The seat spring 62 itself has a predetermined elasticity and when a load is applied to the cushion plate 60, the cushion plate 60 can be entirely moved backward holding the plane condition.

A back-forth adjusting mechanism 65 capable of adjusting the cushion plate 60 in the back and forth direction is provided behind the cushion plate 60 and the back-forth adjusting mechanism 65 serves as an actuating mechanism S which is operated by the operation device 1. The back-forth adjusting mechanism 65 has a laterally elongated pushing body 66 made of synthetic resin and having an elasticity and the central portion of the pushing body 66 is formed on an intermediate mounting portion 67 in parallel to the rear collision sensing body 58.

Mounting projections 68 which are projected backward are formed on the rear face at predetermined positions of the intermediate mounting portion 67 and the mounting projections 68 are inserted into mounting holes 69 formed in the rear collision sensing body 58 and then, the front ends of the mounting projections are fixed by caulking.

Pushing contact portions 70 are formed on both the right and left sides of the intermediate mounting plate 67 outside of the mounting projections 68 such that they are extended in the back and forth direction as they approach sideway. The front ends of the pushing contact portions 70 serve as free ends and the front ends of the pushing contact portions 70 are brought into contact with the rear face of the cushion plate 60.

The cable head 47 of the inner cable 46 of the wire cable 45 is latched to any one of the right and left pushing contact portions 70 and the front end of the outer tube 52 of the wire cable 45 is attached to the other one of the right and left pushing contact portions 70.

When the inner cable 46 is pulled by means of the operation device 1, the wire cable 45 pulls the central portion of the pushing contact portion 70 equipped with the inner cable 46 to the center and the pulling force of the inner cable 46 acts as a reaction force to pull the central portion of the pushing contact portion equipped with the outer tube 52 to the center. As a result, the front end positions of the right and left pushing contact portions 70 are moved forward from the original position, so that the pushing contact portions 70 moves the cushion plate 60 forward.

On the contrary, when the inner cable 46 is loosened, the pushing contact portions 70 are turned to their original positions by the elasticity of the pushing body 66 so that the positions of the front ends of the pushing contact portions 70 are moved backward. Consequently, the pushing force of the cushion plate 60 by the pushing contact portion 70 is weakened to allow the cushion plate 60 to move backward. The pushing body 66 is deformed by pushing or pulling the wire cable 45 so as to adjust the back-forth position of the cushion plate 60.

Reference numeral 71 denotes an attachment groove to which the front end of the inner cable 46'is latched and reference numeral 72 denotes an attachment hole to which the front end of the outer tube 52 is fixed.

The shaft guide 13 is rotatable freely with respect to the drum case 5 and the shaft 34 of the rotation transmitting portion 30. When the shaft guide 13 is rotated in the clockwise direction in FIG. 9, the first contact face 21A of the guide flange 16 presses the first leg portion 20A of the lock spring 7 in the clockwise direction.

When the lock spring 7 is pressed by the contact face 21A of the shaft guide 13, the diameter of the coil portion 8 of the lock spring 7 is decreased to bring the coil portion 8 apart from the inner periphery of the drum case 5, thereby decreasing the frictional resistance. As a result, the operation device 1 is unlocked and the contact face 21A of the shaft guide 13 makes contact with the side edge of the tongue 26 of the connecting portion 25, pushing it in the clockwise direction. Then, the connecting portion 25 is rotated in the clockwise direction by the shaft guide 13.

The clockwise rotation of the connecting portion 25 is transmitted to the rotation transmitting portion 30 via the engaging portion 31 and the rotation transmitting portion 30 rotates the holder guide 43 in the clockwise direction. The cable head 47 of the inner cable 46 of the wire cable 45 is latched to the attachment groove 44 in the holder guide 43. Thus, the holder guide 43 pulls the inner cable 46 of the wire cable 45 so as to actuate the actuating mechanism S.

If the shaft guide 13 is rotated in a counterclockwise direction, the rotation of the shaft guide 13 is transmitted to the holder guide 43 through the connecting portion 25 and the rotation transmitting portion 30, so that the holder guide 43 is rotated in the counterclockwise direction. Consequently, the inner cable 46 of the wire cable 45 is loosened.

Therefore, when the shaft 14 of the shaft guide 13 is rotated, its rotation force is converted to a pushing/pulling force of the inner cable 46 of the wire cable 45 by the holder guide 43 so as to operate the actuating mechanism S provided at a place apart from the operation device 1.

However, usually, the inner cable 46 is pulled from the actuating mechanism S side by a reaction force of the actuating mechanism S, so that the holder guide 43 is forced in the counterclockwise direction in FIG. 9. This force is transmitted to the connecting portion 25 through the attachment portion 31 of the rotation transmitting portion 30 so as to rotate the tongue piece 26 of the connecting portion 25 in the counterclockwise direction. As a result, side edge of the tongue piece 26 makes contact with the first leg portion 20A of the lock spring 7.

If the reaction force from the actuating mechanism S is applied to the tongue piece 26 with the tongue piece 26 in contact with the first leg portion 20A of the lock spring 7, the side edge of the tongue piece 26 presses the first leg portion 20A in the counterclockwise direction. As a result, the radius of the coil portion 8 of the lock spring 7 is increased so as to lock the operation device 1.

The coil portion 76 of the rattling preventing spring 75 is wound around the outer periphery of the inner cylindrical portion 11, so that the rattling preventing spring 75 is held by the inner cylindrical portion 11 at an appropriate strength by a friction between the coil portion 76 and the inner cylindrical portion 11. Then, the projection 77 of the spring 75 is fitted to the fitting hole 78 in the guide flange 16, so as to substantially prevent any rattling in the rotation direction of the shaft guide 13 (shaft 14) with respect to the inner cylindrical portion 11.

Because the projection 77 of the rattling preventing spring 75 is projected outward from halfway of the coil portion 76, the shaft guide 13 can be preferably prevented from rattling both in the normal and reverse directions.

## Claims

1. An operation device (1) comprising:
a lock mechanism (L) having a drum case (5) having a cylindrical drum wall (6), a lock spring (7) containing a coil portion (8) which is fitted into the drum wall (6) and is locked by a friction force against the inner peripheral face of the drum wall (6), and a shaft guide (13) mounted rotatably in the drum case (5) and operated to exert or cancel a friction force of the lock spring (7);
a transmitting mechanism (D) for transmitting a reaction force and an operation force from an actuating mechanism (S) provided between the lock mechanism (L) and the actuating mechanism (S) provided at a desired position, the shaft guide (13) is mounted within the inner cylindrical portion (11) provided in the insertion hole (10) in the drum case (5); **characterized in that**
a rattling preventing spring (75) for preventing a rattling in the rotation direction of the shaft guide (13) is provided between the drum case (5) and the shaft guide (13), wherein
the rattling preventing spring (75) has a coil (76) having a smaller diameter than the inner cylindrical portion (11), the coil (76) being wound around the inner cylindrical portion (11), and a projection projecting (77) radiantly formed in part of the coil portion (76) is fitted to a fitting hole (78) of the guide flange (16) of the shaft guide (13).

2. The operation device according to claim 1, wherein the coil portion (8) of the lock spring (7) is fitted to the cylindrical drum wall (6) surface of the drum case (5), such that when the diameter of the coil portion (8) is enlarged, the lock spring (7) is locked by a friction force between the lock spring (7) and the inner peripheral face of the drum wall (6) and when the diameter of the coil portion (8) is reduced, the friction force with respect to the drum wall (6) is decreased so that the lock spring (7) is unlocked; the shaft guide (13) has a shaft (14) which is to be mounted within the inner cylindrical portion (11) and provided with a cylindrical guide flange (16) located inside the coil (8) of the lock spring (7); a cutout portion (17) is formed in part of the guide flange (16) by cutting out the guide flange (16) in the direction of a bus bar;
a pair of leg portions (20A,20B) of the lock spring (7) bent toward the axis of the drum wall (6) are located between a pair of contact faces (21A,21B) of the cutout portion (17); and the guide flange (16) has the fitting hole (78) in addition to the cutout portion (17).

3. The operation device according to claim 2, wherein the contact faces (21A,21B) of the cutout portion (17) of the guide flange (16) and the leg portions (20A,20B) of the coil portion (8) are formed such that the interval between the contact faces (21A,21B) is larger than the interval between the leg portions (20A,20B).

4. The operation device according to claim 2 or 3, wherein the transmission mechanism (D) comprises:
a connecting portion (25) having a tongue piece (26) which makes contact with any one of the contact faces (21A,21B) within the cutout portion (17) in the guide flange (16);
a holder guide (43) to which an end of the wire cable (45) rotatable integrally with the connecting portion (25) is latched;
and
a rotation transmitting portion (30) which mounts the connecting portion (25) and the holder guide (43) on the shaft guide (13),
and
the other end of the wire cable (45) is connected to the actuating mechanism (S).

## Patentansprüche

1. Betätigungsvorrichtung (1), umfassend:
einen Arretiermechanismus (L), der ein Trommelgehäuse (5) umfasst, das eine zylindrische Trommelwand (6), eine Arretierfeder (7), die einen Windungsabschnitt (8) umfasst, der in die Trommelwand (6) eingefügt und durch eine Reibungskraft an der Innenumfangsfläche der Trommelwand (6) arretiert ist, und eine Wellenführung (13) hat, die drehbar in das Trommelgehäuse (5) eingefügt ist und betätigt wird, um eine Reibungskraft auf die Arretierfeder auszuüben oder aufzuheben; und
einen Übertragungsmechanismus (D) zum Übertragen einer Reaktionskraft und einer Betätigungskraft von einem Stellmechanismus (S), die zwischen dem Arretiermechanismus (L) und dem Stellmechanismus (S) wirkt, der in einer gewünschten Stellung angeordnet ist;
**dadurch gekennzeichnet, dass**
die Wellenführung (13) in dem Innenzylinderabschnitt (11) angebracht ist, der in dem Einfügeloch (10) in dem Trommelgehäuse (5) vorgesehen ist und eine Feder (75) zur Vermeidung von Klappern, die ein Klappern in der Drehrichtung der Wellenführung (13) verhindert, zwischen dem Trommelgehäuse (5) und der Wellenführung (13) vorgesehen ist; wobei
die Feder (75) zur Vermeidung von Klappern eine Windung (76) hat, die einen geringeren Durchmesser als der Innenzylinderabschnitt (11) hat, die Windung (76) um den Innenzylinderabschnitt (11) gewickelt ist und ein Vorsprung (77), der radial in einem Teil des Federabschnittes (76) ausgebildet ist, in ein Einfügeloch (78) des Führungsflansches (16) der Führungswelle (13) eingefügt ist.

2. Betätigungsvorrichtung nach Anspruch 1, bei der der Windungsabschnitt (8) der Arretierfeder (7) derart in die zylindrische Oberfläche der Trommelwand (6) des Trommelgehäuses (5) eingefügt ist, dass, wenn sich der Durchmesser des Windungsabschnittes (8) vergrößert, die Arretierfeder (7) durch eine Reibungskraft zwischen der Arretierfeder (7) und der Innenumfangsfläche der Trommelwand (6) arretiert wird, und wenn sich der Durchmesser des Windungsabschnittes (8) verringert, die Reibungskraft in Bezug auf die Trommelwand (6) verringert wird so dass die Arretierfeder 7 gelöst wird; die Wellenführung (13) eine Welle (14) aufweist, die in dem Innenzylinderabschnitt (11) anzubringen ist und mit einem zylindrischen Führungsflansch (16) versehen ist, der sich innerhalb der Windung (8) der Arretierfeder (7) befindet; ein Ausnehmungsabschnitt (17) in einem Teil des Führungsflansches (16) durch Ausnehmen des Führungsflansches (16) in der Richtung einer Schiene ausgebildet ist; zwei Schenkelabschnitte (20A, 20B) der Arretierfeder (7), die hin zu der Achse der Trommelwand (6) gebogen sind, zwischen zwei Kontaktflächen (21A, 21B) des Ausnehmungsabschnittes (17) angeordnet sind und der Führungsflansch (16) über das Einfügeloch (78) zusätzlich zu dem Ausnehmungsabschnitt (17) verfügt.

3. Betätigungsvorrichtung nach Anspruch 2, bei der die Kontaktflächen (21A, 21 B) des Ausnehmungsabschnittes (17) des Führungsflansches (16) und die Schenkelabschnitte (20A, 20B) des Windungsabschnittes (8) derart ausgebildet sind, dass der Abstand zwischen den Kontaktflächen (21A, 21 B) größer ist als der Abstand zwischen den Schenkelabschnitten (20A, 20B).

4. Betätigungsvorrichtung nach Anspruch 2 oder 3, bei der der Übertragungsmechanismus (D) umfasst:
einen Verbindungsabschnitt (25), der über ein Zungenstück (26) verfügt, das einen Kontakt mit einer der Kontaktflächen (21A, 21 B) in dem Ausnehmungsabschnitt (17) in dem Führungsflansch (16) herstellt;
eine Halterführung (43), an der ein Ende eines Leitungskabels (45) angebracht ist, das mit dem Verbindungsabschnitt (25) integral drehbar ist; und
einen Drehübertragungsabschnitt (30), der den Verbindungsabschnitt (25) und die Halterführung (43) an der Wellenführung (13) anbringt,
wobei das andere Ende des Leitungskabels (45) mit dem Stellmechanismus (S) verbunden ist.

## Revendications

1. Dispositif de fonctionnement (1) comprenant :
un mécanisme de verrouillage (L) ayant un boîtier de tambour (5) ayant une paroi de tambour cylindrique (6), un ressort de verrouillage (7) contenant une portion de spire (8) qui est insérée dans la paroi de tambour (6) et est verrouillée par une force de frottement contre la face périphérique intérieure de la paroi de tambour (6), et un guide d'arbre (13) monté de manière rotative dans le boîtier de tambour (5) et actionné pour exercer ou annuler une force de frottement du ressort de blocage (7) ;
un mécanisme de transmission (D) pour transmettre une force de réaction et une force de fonctionnement à partir d'un mécanisme d'actionnement (S) agencé entre le mécanisme de verrouillage (L) et le mécanisme d'actionnement (S) agencé à une position désirée,
**caractérisé en ce que** le guide d'arbre (13) est monté au sein de la portion cylindrique intérieure (11) agencée dans le trou d'insertion (10) dans le boîtier de tambour (5) ;
un ressort de prévention de cliquetis (75) pour empêcher un cliquetis dans le sens de rotation du guide d'arbre (13) est agencé entre le tambour de boîtier (5) et le guide d'arbre (13), dans lequel le ressort de prévention de cliquetis (75) a une spire (76) ayant un diamètre plus petit que la portion cylindrique intérieure (11), la spire (76) étant enroulé autour de la portion cylindrique intérieure (11), et une saillie (77) faisant saillie de manière radiante, formée dans une partie de la portion de spire (76) est insérée dans un trou d'insertion (78) de la collerette de guide (16) du guide d'arbre (13).

2. Dispositif de fonctionnement selon la revendication 1, dans lequel la portion de spire (8) du ressort de verrouillage (7) est insérée à la surface de la paroi de tambour cylindrique (6) du boîtier de tambour (5), de telle sorte que lorsque le diamètre de la portion de spire (8) est élargi, le ressort de verrouillage (7) est verrouillé par une force de frottement entre le ressort de verrouillage (7) et la face périphérique intérieure de la paroi de tambour (6), et lorsque le diamètre de la portion de spire (8) est réduit, la force de frottement par rapport à la paroi de tambour (6) est diminuée de sorte que le ressort de verrouillage (7) est déverrouillé ; le guide d'arbre (13) a un arbre (14) qui doit être monté à l'intérieur de la portion cylindrique intérieure (11) et muni d'une collerette de guide cylindrique (16) située à l'intérieur de la spire (8) du ressort de verrouillage (7) ; une portion découpée (17) est formée dans une partie de la collerette de guide (16) en découpant la collerette de guide (16) dans la direction d'une barre omnibus ; une paire de portions de branche (20A, 20B) du ressort de verrouillage (7) pliées vers l'axe de la paroi de tambour (6) est située entre une paire de faces de contact (21A, 21B) de la portion découpée (17) ; et la collerette de guide (16) a le trou d'insertion (78) en plus de la portion découpée (17).

3. Dispositif de fonctionnement selon la revendication 2, dans lequel les faces de contact (21A, 21B) de la portion découpée (17) de la collerette de guide (16) et les portions de branche (20A, 20B) de la portion de spire (8) sont formées de telle sorte que l'intervalle entre les faces de contact (21A, 21B) est plus grand que l'intervalle entre les portions de branche (20A, 20B).

4. Dispositif de fonctionnement selon la revendication 2 ou 3, dans lequel le mécanisme de transmission (D) comprend :
une portion de liaison (25) ayant une pièce de languette (26) qui fait contact avec l'une quelconque des faces de contact (21A, 21B) à l'intérieur de la portion découpée (17) dans la collerette de guide (16) ;
un guide de support (43) auquel est enclenchée une extrémité du câble à fils (45) solidaire en rotation avec la portion de liaison (25) ; et
une portion de transmission de rotation (30) qui monte la portion de liaison (25) et le guide de support (43) sur le guide d'arbre (13), et
l'autre extrémité du câble à fils (45) est reliée au mécanisme d'actionnement (S).
